(19) Europäisches Patentamt
European Patent Office
Office européen des brevets

(11) EP 0 676 436 B1

(12) **EUROPÄISCHE PATENTSCHRIFT**

(45) Veröffentlichungstag und Bekanntmachung des Hinweises auf die Patenterteilung:
**06.05.1999 Patentblatt 1999/18**

(21) Anmeldenummer: **95102759.8**

(22) Anmeldetag: **27.02.1995**

(51) Int Cl.[6]: **C08G 64/14**, C08G 64/18, C08L 69/00
// (C08L69/00, 69:00), (C08L69/00, 69:00, 23:22)

(54) **Aromatische Polycarbonate mit polyolefinischen Ketocarboxyl-Endgruppen gemischt mit bekannten Polycarbonaten**

Aromatic polycarbonates with polyolefinic ketocarboxylic endgroups mixed with known polycarbonates

Polycarbonates aromatiques avec des groupes terminaux cétocarboxyliques polyoléfiniques mélangés avec des polycarbonates connus

(84) Benannte Vertragsstaaten:
**BE DE ES FR GB IT NL**

(30) Priorität: **11.03.1994 DE 4408214**
**11.07.1994 DE 4424399**

(43) Veröffentlichungstag der Anmeldung:
**11.10.1995 Patentblatt 1995/41**

(73) Patentinhaber: **BAYER AG**
**51368 Leverkusen (DE)**

(72) Erfinder:
- **Ebert, Wolfgang, Dr.**
  **D-47800 Krefeld (DE)**
- **Köhler, Burkhard, Dr.**
  **D-47829 Krefeld (DE)**
- **Horn, Klaus, Dr.**
  **D-41539 Dormagen (DE)**
- **Weider, Richard, Dr.**
  **D-51381 Leverkusen (DE)**
- **Scholl, Thomas, Dr.**
  **D-51469 Bergisch Gladbach (DE)**
- **Dhein, Rolf, Dr.**
  **D-47800 Krefeld (DE)**
- **Kirsch, Jürgen, Dr.**
  **D-51375 Leverkusen (DE)**
- **Wehrmann, Rolf, Dr.**
  **D-47800 Krefeld (DE)**

(56) Entgegenhaltungen:
**EP-A- 0 248 261**
**EP-A- 0 258 689**
**EP-A- 0 305 718**
**EP-A- 0 412 407**
**DE-A- 3 941 563**
**US-A- 4 358 563**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 676 436 B1

## Beschreibung

Gegenstand der vorliegenden Erfindung ist ein Verfahren zur Herstellung von aromatischen Polycarbonaten mit aliphatischen, Ketocarboxyl-Endgruppen und mit mittleren Molekulargewichten $\overline{M}w$ (Gewichtsmittel, ermittel durch Lichtstreuung) zwischen 8 000 und 150 000, im Gemisch mit bekannten aromatischen Polycarbonaten mit $\overline{M}w$ (Gewichtsmittel, ermittelt durch Lichtstreuung) zwischen 8 000 und 150 000 aus Diphenolen, 1 Mol-% bis 20 Mol-%, bezogen auf Mole Diphenole, Kettenabbrecher, Phosgen und gegebenenfalls Verzweigern nach den bekannten Polycarbonatherstellungsmethoden des Phasengrenzflächenverfahrens oder des Verfahrens in homogener Lösung, das dadurch gekennzeichnet ist, daß man Kettenabbrecher der Formel (I)

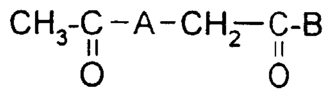

(I),

in Kombination mit anderen, bekannten Kettenabbrechern, verwendet, wobei 0,5 Mol-% bis 50 Mol-% Kettenabbrecher der Formel (I), bezogen auf die Molsumme der Kettenabbrecher, eingesetzt werden.

In den Kettenabbrechern der Formel (I) ist -A- ein polymerer, aliphatischer Rest, der durch Polymerisation ungesättigter Verbindungen hergestellt ist, und B eine funktionelle Gruppe, die bei der Polycarbonatherstellung nach dem Zweiphasengrenzflächenverfahren oder nach dem Verfahren in homogener Phase (Pyridinverfahren) als reaktiver Teil der Kettenabbrecher (I) fungiert. Bevorzugte Gruppen B sind -OH oder -Cl.

Das Molekulargewicht $\overline{M}n$ (Zahlenmittelmolekulargewicht ermittelt durch Gelpermeationschromatographie) der Kettenabbrecher der Formel (I) beträgt zwischen 250 und 30.000, vorzugsweise zwischen 1.000 und 10.000.

Bevorzugte Verbindungen der Formel (I) mit B = OH werden beispielsweise erhalten durch Oxidation von Isobutylen-Isopren-Copolymerisaten gemäß DE-OS 21 47 874.

Isobutylen-Isopren-Copolymere sind ihrerseits durch Copolymerisation von Isobutylen und 0,3 Mol-% bis 25 Mol-%, bezogen auf 1 Mol Isobutylen-Monomer, Isopren erhältlich und beispielsweise unter der Bezeichnung Butylkautschuk kommerziell verfügbar. Das Dien liegt dabei im wesentlichen in der 1,4-Position verknüpft vor, geringe Anteile 1,2-Verknüpfung, wie sie in allen kommerziell erhältlichen Butylkautschuken vorhanden sind und die sich nicht vollständig unterdrücken lassen, führen zu ebenfalls geringen Anteilen seitenständiger Carboxylgruppen.

Die Oxidation dieser Isobutylen-Isopren-Copolymeren gemäß DE-OS 21 47 874 erfolgt beispielsweise mittels Ozon bei leicht erhöhter oder bei Raumtemperatur.

Aus den Verbindungen der Formel (I) mit B = OH können in bekannter Weise die Säurechloride mit B = Cl erhalten werden, indem man diese Verbindungen in üblicher Weise mit Thionyl- oder Sulfonylchlorid oder Phosgen chloriert.

Beispiele für erfindungsgemäß einzusetzende Kettenabbrecher der Formel (I) sind folgende Ozonisierungsprodukte von Polyisobutylen-isopren-kautschuken mit 0,3-25 Mol-% einpolymerisiertem Isopren, die wie folgt charakterisiert sind:

PIB-Carbonsäure I:

Säurezahl: 15 mg KOH/g, daraus berechnet ein Molekulargewicht: 3733 g/Mol
Iodzahl: : > 1
OH-Zahl : > 2

PIB-Carbonsäure II:

Säurezahl: 190 mg KOH/g, daraus berechnet ein Molekulargewicht: 295 g/Mol
Iodzahl: : > 1
OH-Zahl : > 2

PIB-Carbonsäure III:

Säurezahl: 32 mg KOH/g, daraus berechnet ein Molekulargewicht: 1750 g/Mol
Iodzahl: : 2
OH-Zahl : > 2

PIB-Carbonsäure IV:

Säurezahl: 6 mg KOH/g, daraus berechnet ein Molekulargewicht: 9333 g/Mol
Iodzahl: : > 1
OH-Zahl : > 2

Bekannte, bei dem erfindungsgemäßen Verfahren mitzuverwendende andere Kettenabbrecher sind beispielsweise Phenole, Carbonsäurehalogenide, Sulfonsäurechloride oder Chlorkohlensäureester.

Beispiele für die bekannten, mitzuverwendenden Kettenabbrecher sind Phenol, p-tert.-Butylphenol, 2,6-Dimethylphenol, p-Isooctylphenol, Acetylchlorid und Benzoylchlorid, sowie deren Gemische.

Gegenstand der vorliegenden Erfindung sind außerdem die nach dem erfindungsgemäßen Verfahren erhältlichen aromatischen Polycarbonate mit Endgruppen der Formel (Ia)

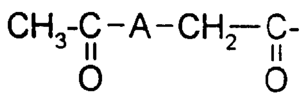

(Ia)

worin A die für Formel (I) genannte Bedeutung hat, mit $\overline{M}w$ (Gewichtsmittel, ermittelt durch Lichtstreuung) zwischen 8 000 und 150 000, im Gemisch mit bekannten aromatischen Polycarbonaten mit $\overline{M}w$ (Gewichtsmitel, ermittelt durch Lichtstreuung) zwischen 8 000 und 150 000, die aus dem Kettenabbruch mit den anderen, bekannten Kettenabbrechern resultieren.

Erfindungsgemäß erhältliche aromatische Polycarbonate mit mittleren Molekulargewichten $\overline{M}w$ (Gewichtsmittel ermittelt durch Lichtstreuung) zwischen 8 000 und 150 000 sind vorzugsweise solche der Formel (II)

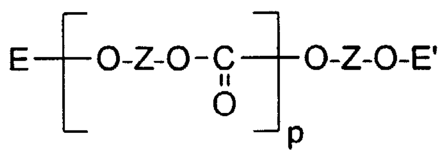

(II)

worin

-O-Z-O- ein Diphenolatrest mit vorzugsweise 6 bis 30 C-Atomen ist,

E und E' sind Kettenabbrecherreste, wobei 0,5 Mol-% bis 50 Mol-% der Summe aus Molen E + E' einem Rest der Formel (Ia)

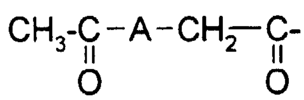

(Ia)

entsprechen,
worin -A- die für Formel (I) genannte Bedeutung hat, und wobei die übrigen Endgruppen E und E' aus der Reaktion mit den anderen, bekannten Kettenabbrechern, gegebenenfalls unter Einbeziehung von Phosgen resultieren und wobei

p der Polymerisationsgrad ist, der aus den Molekulargewichten $\overline{M}w$ von 8 000 bis 150 000 resultiert und zwischen 5 und 600 liegt.

Die erfindungsgemäßen Polycarbonate bzw. Polycarbonatgemische haben eine sehr gute Chemikalienbeständigkeit.

Aus der DE-OS 26 20 256 (Le A 16 686) sind Polycarbonate bekannt, die aliphatische Carboxylreste als Endgruppen haben. Sie zeichnen sich durch eine verbesserte Entformbarkeit aus.

Aus der DE-OS 26 36 783 (Le A 16 689) sind Polycarbonate bekannt, die carboxylgruppenhaltige Segmente mit Mn größer 600 eingebaut enthalten. Die COOH-haltigen Segmente können auch monofunktionell sein (Seite 5, drittletzte Zeile der DE-OS).

Aus der DE-OS 27 02 626 (Le A 17 356) sind ebenfalls Polycarbonate bekannt, die carboxylgruppenhaltige Segmente mit $\overline{M}n$ größer 600, insbesondere zwischen 1.000 und 20.000 eingebaut enthalten. Die Segmente können auch monofunktionell sein (Seite 6, Absatz 1 der DE-OS).

Aus der DE-OS 27 16 304 (Le A 18 024) sind Polycarbonatgemische bekannt, wobei die Polycarbonate auch aliphatische Carboxylreste enthalten können. Die Polycarbonatgemische haben wiederum eine verbesserte Entformbarkeit.

Aus der DE-OS 36 18 378 (Le A 24 330) sind Poly-($C_2$-$C_{10}$-α-olefin)-carbonsäuren mit $\overline{M}w$ von 2.000 bis 350.000 bekannt, die eine COOH-Funktionalität von 0,5 bis 2,0 pro Molekül haben (Seite 5, Zeilen 7 bis 13 der DE-OS). Diese Carbonsäuren werden zur Herstellung von Polyolefin-Polycarbonat-Blockcopolymeren verwendet (Seite 3, Zeilen 7 bis 10 der DE-OS). Diese Polyolefin-Polycarbonat-Blockcopolymeren finden technische Verwendung, beispielsweise als Haftvermittler, Kompatibilitätsverbesserer oder Dispergatoren in unverträglichen, thermoplastischen Polymermischungen. Demgegenüber haben die erfindungsgemäßen Polycarbonate bzw. Polycarbonatgemische den folgenden Vorteil: Aufgrund der kleinen Uneinheitlichkeit der erfindungsgemäßen Endgruppen wird ein wesentlich homogeneres Polycarbonat beziehungsweise Polycarbonatgemisch erhalten.

Für die Herstellung der erfindungsgemäßen Polycarbonate geeignete Diphenole der Formel (III)

$$HO\text{-}Z\text{-}OH \qquad (III)$$

mit vorzugsweise 6 bis 30 C-Atomen sind sowohl einkernige, als auch mehrkernige Diphenole, die Heteroatome enthalten können und unter den Bedingungen der Polycarbonatherstellung und deren thermischer Behandlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und α,α-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan, 1,1-Bis-(4-hydroxyphenyl)-3,3-dimethylcyclohexan,
1,1-Bis-(4-hydroxyphenyl)-4-methyl-cyclohexan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl)-1-phenylethan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan,
1,1-Bis-(4-hydroxyphenyl)1-phenylethan,

1,1-Bis-(4-hydroxyphenyl)-3,3,5-trimethylcyclohexan,
1,1-Bis-(4-hydroxyphenyl)-3-methylcyclohexan und
1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1-Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4''-dihydroxytriphenyl)methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die Herstellung der erfindungsgemäßen Polycarbonate bzw. Polycarbonatgemische kann im wesentlichen nach folgenden zwei bekannten Methoden (vgl. H. Schnell, "Chemistry and Physics of Polycarbonates", Polymer Review, Vol. IX, Seite 27 ff., Interscience Publ. 1964) erfolgen:

1. Nach dem Lösungsverfahren in disperser Phase (sogenanntes Zweiphasengrenzflächen-Verfahren):

Hierbei werden die einzusetzenden Diphenole in wäßriger alkalischer Phase gelöst. Dazu werden die zur Herstellung der erfindungsgemäßen Polycarbonate erforderlichen Kettenabbrecher in Mengen von 1,0 bis 20,0 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C und 40°C.

Die Zugabe der erforderlichen Kettenabbrecher in Art und Menge wie oben angegeben, kann auch während oder nach der Phosgenierung erfolgen.

Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.

Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.

Werden Verzweiger mitverwendet, so kann deren Zugabe vor der Umsetzung mit Phosgen oder während der Phosgenierung erfolgen. Neben oder anstelle der Diphenole können auch deren Chlorkohlensäureester eingesetzt werden.

2. Nach dem Lösungsverfahren in homogener Phase (auch Pyridin-Verfahren genannt):

Hierbei werden die Diphenole in organischen Basen wie Pyridin gelöst, gegebenenfalls unter Zusatz weiterer organischer Lösungsmittel; dann werden, wie unter 1. beschrieben, die zur Herstellung der erfindungsgemäßen Polycarbonate erforderlichen Kettenabbrecher in Mengen von 1,0 bis 20,0 Mol-%, bezogen auf Mol Diphenol, bei Raumtemperatur zugegeben.

Dann wird mit Phosgen umgesetzt. Die Reaktionstemperatur liegt zwischen 0°C und 40°C. Geeignete organische Basen außer Pyridin sind z.B. Triethylamin, Tributylamin; geeignete Lösungsmittel sind beispielsweise Methylenchlorid, Chlorbenzol, Toluol oder Gemische aus Methylenchlorid und Chlorbenzol oder Toluol.

Die Isolierung der erfindungsgemäßen Polycarbonate erfolgt bei den Verfahrensvarianten 1 und 2 in bekannter Weise. Geeignete Aufarbeitungsverfahren sind insbesondere das Ausfällen, die Sprühtrocknung und das Verdampfen des Lösungsmittels im Vakuum.

Bei der Mitverwendung von Verzweigern wird wie unter 1. beschrieben verfahren.

Neben den Diphenolen können auch bis zu 50 Mol-%, bezogen auf die eingesetzten Diphenole, von deren Bischlorkohlensäureestern eingesetzt werden.

Den erfindungsgemäßen Polycarbonaten können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Die erfindungsgemäßen Polycarbonate können zu Formkörpern verarbeitet werden, indem man beispielsweise die in bekannter Weise isolierten Polycarbonate zu Granulat extrudiert und dieses Granulat gegebenenfalls nach Zusatz der obengenannten Additive durch Spritzguß zu verschiedenen Artikeln in bekannter Weise verarbeitet.

Die erfindungsgemäßen Polycarbonate sind als Formkörper überall dort einsetzbar, wo die bislang bekannten

Polycarbonate eingesetzt wurden, also beispielsweise im Elektrosektor sowie im Bausektor, und zwar dann, wenn erhöhte Chemikalienbeständigkeit verlangt wird.

Beispiele für Verwendungen sind Folien, Verbundfolien, Extrusions- und Spritzgußformteile mit und ohne Füllstoffe bzw. Glasfaserverstärkung wie z.B. Sicherheitshelme, Schaumstoffe, Plattenware und Blaskörper, sowie medizinische Artikel, wie Schläuche und Kurzzeitimplantate.

Den nach dem erfindungsgemäßen Verfahren erhältlichen Polycarbonaten können noch andere Thermoplaste in üblichen Mengen zugemischt werden.

Geeignete andere Thermoplaste sind beispielsweise aromatische Polyestercarbonate und Polyalkylenterephthalate.

Die Eigenschaften der erfindungsgemäßen Polycarbonate können somit zusätzlich modifiziert werden.

Insbesondere können auch reaktionslose Polyisobutylene zur weiteren Modifizierung der erfindungsgemäßen Polycarbonate beziehungsweise der erfindungsgemäßen Polycarbonatgemische zugesetzt werden.

Gegenstand der vorliegenden Erfindung sind somit auch Mischungen aus

A) 80-99 Gew.-%, vorzugsweise 85-97 Gew.-% der erfindungsgemäß erhältlichen Polycarbonate beziehungsweise Polycarbonatgemische und

B) 1-20 Gew.-%, vorzugsweise 3-15 Gew.-% an reaktionslosen Polyisobutylenen.

Polyisobutylene gemäß Komponente B) der vorliegenden Erfindung sind kationische Polymerisate von Olefinen und gegebenenfalls Dienen mit einem Gehalt von mindestens 85 % Isobutylen. Polyisobutylene sind unter dem Stickwort "Polyisobutylene" auf Seite 3539, Band 5, in Römpp Chemie Lexikon, 9. Auflage, 1992, Georg Thieme Verlag beschrieben. Die Molmasse der erfindungsgemäß zu verwendeten Polyisobutylene beträgt 1 000 bis 5 000 000, vorzugsweise 10 000 bis 1 200 000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3), 2-Propylbutadien-(1,3), Pentadien, Hexadien 2-Ethylbutadien-(1,3), 2-Propylbutadien-(1,3), 2-Phenylbutadien-(1,3), 2-Methylpentadien-(1,3) oder 3-Propylenhexadien. Andere geeignete olefinische Comonomere sind Styrol, $\alpha$-Methylstyrol, m/p-Methylstyrol oder Divinylbenzol.

Die Herstellung dieser Mischungen erfolgt über die Schmelze bei Temperaturen von 220°C bis 380°C.

Bezüglich Isolierung dieser erfindungsgemäßen Mischungen, der Verarbeitung dieser erfindungsgemäßen Mischungen und der technischen Einsetzbarkeit dieser Mischungen gelten die vorstehend für die erfindungsgemäß erhältlichen Polycarbonate beziehungsweise Polycarbonatgemische gemachten Ausführungen.

## Beispiele

Allgemein:
Als Ketocarbonsäuren wurden Ozonisierungsprodukte von Polyisobutylen-isopren-kautschuken eingesetzt, die wie folgt charakterisiert wurden:
PIB-carbonsäure I:

| | |
|---|---|
| Säurezahl: | 15 mg KOH/g, daraus berechnet ein Molekulargewicht: 3733 g/Mol |
| Iodzahl: | >1 |
| OH-Zahl: | >2 |

PIB-carbonsäure II:

| | |
|---|---|
| Säurezahl: | 190 mg KOH/g, daraus berechnet ein Molekulargewicht: 295 g/Mol |
| Iodzahl: | >1 |
| OH-Zahl: | >2 |

PIB-carbonsäure III:

| | |
|---|---|
| Säurezahl: | 32 mg KOH/g, daraus berechnet ein Molekulargewicht: 1750 g/Mol |
| Iodzahl: | 2 |
| OH-Zahl: | >2 |

PIB-carbonsäure IV:

| | |
|---|---|
| Säurezahl: | 6 mg KOH/g, daraus berechnet ein Molekulargewicht: 9333 g/Mol |

Iodzahl: >1
OH-Zahl: >2

**Beispiel 1**

Polycarbonat mit 0,5 Gew.-% Polyisobutylencarbonsäure (M = 3733) als Teil des Kettenabbrechers.
In einem 1 l-4-Halswellenbrecherkolben, mit Rührer, Gaseinleitungsrohr, Thermometer, Rückflußkühler und gegebenenfalls Tropftrichter und pH-Elektrode werden bei Raumtemperatur, unter Einleitung von Stickstoff 22,83 g (0,1 m) Bisphenol A, 39,11 g (0,44 m) NaOH (45 %ig) und 0,298 g Phenol in 232 ml destilliertem Wasser gelöst. 0,13 g PIB-carbonsäure I gelöst in 135 ml Dichlormethan und 135 ml Chlorbenzol werden zugegeben. Bei Temperaturen zwischen 20°C bis 25°C werden unter Rühren (800 U/min) 16 g (0,16 m) Phosgen während 15 bis 30 min eingeleitet. Anschließend werden 0,11 ml N-Ethylpiperidin als Katalysator zugesetzt und 45 min bei Raumtemperatur nachgerührt. Danach wird das Reaktionsgemisch mit verdünnter Salzsäure angesäuert und die organische Phase abgetrennt. Die organische Phase wird anschließend mit ionenfreiem Wasser 5 bis 10 x gewaschen, bis Reste der Säure und ionische Bestandteile entfernt worden sind. Die organische Phase wird anschließend über wasserfreiem Natriumsulfat getrocknet und bei 100°C im Vakuumtrockenschrank eingetrocknet.
Ausbeute: 25,2 g; $\eta_{rel}$ = 1,324

**Beispiel 2**

Polycarbonat mit 1,0 Gew.-% Polyisobutylencarbonsäure I (M = 3733) als Teil des Kettenabbrechers.
Wie Beispiel 1, jedoch werden 0,295 g Phenol und 0,26 g PIB-carbonsäure I verwendet.
Ausbeute: 25,1 g; $\eta_{rel}$ = 1,312

**Beispiel 3**

Polycarbonat mit 2,0 Gew.-% Polyisobutylencarbonsäure I (M = 3733) als Teil des Kettenabbrechers.
Wie Beispiel 1, jedoch werden 0,289 g Phenol und 0,52 g PIB-carbonsäure I verwendet.
Ausbeute: 25,3 g; $\eta_{rel}$ = 1,331

**Beispiel 4**

Polycarbonat mit 3,0 Gew.-% Polyisobutylencarbonsäure I (M = 3733) als Teil des Kettenabbrechers.
Wie Beispiel 1, jedoch werden 0,282 g Phenol und 0,79 g PIB-carbonsäure I verwendet.
Ausbeute: 25,0 g; $\eta_{rel}$ = 1,319

**Beispiel 5**

Polycarbonat mit 3,0 Gew.-% Polyisobutylencarbonsäure I (M = 3733) als Teil des Kettenabbrechers.
Wie Beispiel 1, jedoch werden 0,282 g Phenol und 0,79 g PIB-carbonsäure I verwendet und während der Phosgenierung ein pH-Wert von ca. 8-10 eingehalten. Vor der Zugabe des Katalysators wird dann auf pH = 12 eingestellt und dieser Wert während der Nachkondensationszeit gehalten. Zur Einstellung des pH-Wertes wurden 2/3 der angegebenen Natronlauge bedarfsweise über den Tropftrichter zugegeben.
Ausbeute: 24,6; $\eta_{rel}$ = 1,267

**Beispiel 6**

Polycarbonat mit 4,0 Gew.-% Polyisobutylencarbonsäure I (M = 3733) als Teil des Kettenabbrechers.
Wie Beispiel 1, jedoch werden 0,278 g Phenol und 1,05 g PIB-carbonsäure I verwendet.
Ausbeute: 25,6 g; $\eta_{rel}$ = 1,323

**Beispiel 7**

Polycarbonat mit 5,0 Gew.-% Polyisobutylencarbonsäure I (M = 3733) als Teil des Kettenabbrechers.
Wie Beispiel 1, jedoch werden 0,271 g Phenol und 1,32 g PIB-carbonsäure I verwendet.
Ausbeute: 25,4 g; $\eta_{rel}$ = 1,328

**Beispiel 8**

Polycarbonat mit 7,5 Gew.-% Polyisobutylencarbonsäure I (M = 3733) als Teil des Kettenabbrechers.
Wie Beispiel 1, jedoch werden 0,256 g Phenol und 1,98 g PIB-carbonsäure I verwendet.
Ausbeute: 26,8 g; $\eta_{rel}$ = 1.315

**Beispiel 9**

Polycarbonat mit 10,0 Gew.-% Polyisobutylencarbonsäure I (M = 3733) als Teil des Kettenabbrechers.
Wie Beispiel 1, jedoch werden 0,241 g Phenol und 2,63 g PIB-carbonsäure I verwendet.
Ausbeute: 27,5 g; $\eta_{rel}$ = 1,313

**Beispiel 10**

Polycarbonat mit 20,0 Gew.-% Polyisobutylencarbonsäure I (M = 3733) als Teil des Kettenabbrechers.
Wie Beispiel 1, jedoch werden 0,181 g Phenol und 5,27 g PIB-carbonsäure I verwendet.
Ausbeute: 29,6 g; $\eta_{rel}$ = 1,323

**Beispiel 11**

Polycarbonat mit 3,0 Gew.-% Polyisobutylencarbonsäure II (M = 295) als Teil des Kettenabbrechers.
Wie Beispiel 1, jedoch werden 0,047 g Phenol und 0,79 g PIB-carbonsäure II verwendet.
Ausbeute: 24,32 g; $\eta_{rel}$ = 1,325

**Beispiel 12**

Polycarbonat mit 3,0 Gew.-% Polyisobutylencarbonsäure II (M = 295) als Teil des Kettenabbrechers.
Wie Beispiel 1, jedoch werden 0,047 g Phenol und 0,79 g PIB-carbonsäure II verwendet und während der Phosgenierung ein pH-Wert von ca. 8-10 eingehalten. Vor der Zugabe des Katalysators wird dann auf pH = 12 eingestellt und dieser Wert während der Nachkondensationszeit gehalten. Zur Einstellung des pH-Wertes wurden 2/3 der angegebenen Natronlauge bedarfsweise über den Tropftrichter zugegeben.
Ausbeute: 24,7; $\eta_{rel}$ = 1,293

**Beispiel 13**

Polycarbonat mit 3,0 Gew.-% Polyisobutylencarbonsäure II (M = 295) als Teil des Kettenabbrechers.
Wie Beispiel 1, jedoch werden 0,047 g Phenol und 0,79 g PIB-carbonsäure II verwendet und erst kurz vor der Zugabe des Katalysators zugesetzt.
Ausbeute: 24,9 g; $\eta_{rel}$ = 1,333

**Beispiel 14**

Polycarbonat mit 3,0 Gew.-% Polyisobutylencarbonsäure III (M = 1750) als Teil des Kettenabbrechers.
Wie Beispiel 1, jedoch werden 0,263 g Phenol und 0,79 g PIB-carbonsäure III verwendet und erst kurz vor der Zugabe des Katalysators zugesetzt.
Ausbeute: 24,5 g; $\eta_{rel}$ = 1,339

**Beispiel 15**

Polycarbonat mit 3,0 Gew.-% Polyisobutylencarbonsäure III (M = 1750) als Teil des Kettenabbrechers.
Wie Beispiel 14, jedoch wird während der Phosgenierung ein pH-Wert von 8-10 eingehalten. Vor der Zugabe des Katalysators wird dann auf pH = 12 eingestellt und dieser Wert während der Nachkondensationszeit gehalten. Zur Einstellung des pH-Wertes wurden 2/3 der angegebenen Natronlauge bedarfsweise über den Tropftrichter zugegeben.
Ausbeute: 24,7 g; $\eta_{rel}$ = 1,294

**Beispiel 16**

Polycarbonat mit 3,0 Gew.-% Polyisobutylencarbonsäure IV (M = 9333) als Teil des Kettenabbrechers.

Wie Beispiel 1, jedoch werden 0,292 g Phenol und 0,79 g PIB-carbonsäure IV verwendet.
Ausbeute: 24,5 g; $\eta_{rel}$ = 1,331

**Beispiel 17**

Polycarbonat mit 3,0 Gew.-% Polyisobutylencarbonsäure IV (M = 9333) als Teil des Kettenabbrechers.
Wie Beispiel 16, jedoch wird während der Phosgenierung ein pH-Wert von 8-10 eingehalten. Vor der Zugabe des Katalysators wird dann auf pH = 12 eingestellt und dieser Wert während der Nachkondensationszeit gehalten. Zur Einstellung des pH-Wertes wurden 2/3 der angegebenen Natronlauge bedarfsweise über den Tropftrichter zugegeben.
Ausbeute: 24,4 g; $\eta_{rel}$ = 1,303

## Patentansprüche

1. Verfahren zur Herstellung von aromatischen Polycarbonaten mit aliphatischen Ketocarboxyl-Endgruppen und mit mittleren Molekulargewichten $\overline{M}w$ (Gewichtsmittel, ermittelt durch Lichtstreuung) zwischen 8 000 und 150 000, im Gemisch mit bekannten aromatischen Polycarbonaten mit $\overline{M}w$ (Gewichtsmittel, ermittelt durch Lichtstreuung) zwischen 8 000 und 150 000, aus Diphenolen, 1 Mol-% bis 20 Mol-%, bezogen auf Mole Diphenol, Kettenabbrecher, Phosgen und gegebenenfalls Verzweigern nach den bekannten Polycarbonatherstellungsmethoden des Phasengrenzflächenverfahrens oder des Verfahrens in homogener Lösung, dadurch gekennzeichnet, daß man Kettenabbrecher der Formel (I)

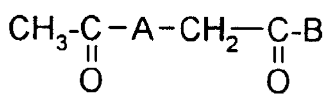 (I)

mit einem Molekulargewicht $\overline{M}n$ (Zahlenmittelmolekulargewicht, ermittelt durch Gelpermeationschromotographie) von 250 bis 30.000, worin -A- ein polymerer, aliphatischer Rest der durch Polymerisation ungesättigter Verbindungen erhältlich ist und B eine funktionelle Gruppe ist, die bei der Polycarbonatherstellung als reaktiver Teil der Kettenabbrecher (I) fungiert, in Kombination mit anderen bekannten Kettenabbrechern verwendet, wobei 0,5 Mol-% bis 50 Mol-% Kettenabbrecher der Formel (I), bezogen auf die Molsumme der Kettenabbrecher eingesetzt werden.

2. Aromatische Polycarbonate mit Endgruppen der Formel (Ia)

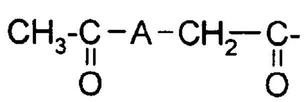 (Ia)

worin -A- die für Formel (I) in Anspruch 1 genannte Bedeutung hat,
mit $\overline{M}w$ (Gewichtsmittel, ermittelt durch Lichtstreuung) zwischen 8 000 und 150 000, im Gemisch mit bekannten aromatischen Polycarbonaten mit $\overline{M}w$ (Gewichtsmittel, ermittelt durch Lichtstreuung) zwischen 8000 und 150 000, die aus dem Kettenabbruch mit den anderen bekannten Kettenabbrechern resultieren, erhältlich gemäß Verfahren des Anspruchs 1.

3. Polycarbonate mit mittleren Molekulargewichten $\overline{M}w$ (Gewichtsmittel ermittelt durch Lichtstreuung) zwischen 8 000 und 150 000 der Formel (II)

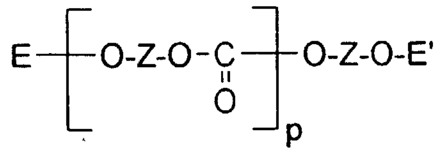 (II)

worin

-O-Z-O- ein Diphenolatrest mit vorzugsweise 6 bis 30 C-Atomen ist,

E und E' sind Kettenabbrecherreste, wobei 0,5 Mol-% bis 50 Mol-% der Summe aus Molen E+E' einem Rest der Formel (Ia)

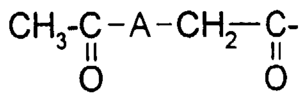 (Ia)

entsprechen,
worin -A- die für Formel (I) in Anspruch 1 genannte Bedeutung hat, und wobei die übrigen Endgruppen E und E' aus der Reaktion mit den anderen, bekannten Kettenabbrechern, gegebenenfalls unter Einbeziehung von Phosgen resultieren und wobei

p der Polymerisationsgrad ist, der aus den Molekulargewichten $\overline{M}w$ von 8000 bis 150 000 resultiert und zwischen 5 und 600 liegt.

**4.** Mischungen aus

A) 80-99 Gew.-%, vorzugsweise 85-97 Gew.-% der gemäß Anspruch 1 erhältlichen Polycarbonate beziehungsweise Polycarbonatgemische und

B) 1-20 Gew.-%, vorzugsweise 3-15 Gew.-% an reaktionslosen Polyisobutylenen.

**Claims**

**1.** Process for the preparation of aromatic polycarbonates with aliphatic ketocarboxyl end groups and with average molecular weights $\overline{M}w$ (weight-average, determined by light scattering) of between 8000 and 150,000, mixed with known aromatic polycarbonates with $\overline{M}w$ (weight-average, determined by light scattering) of between 8000 and 150,000, consisting of diphenols, 1 mol% to 20 mol%, based on moles of diphenol, of chain cleavage additives, phosgene and optionally branching agents, by the known polycarbonate preparation methods of the phase boundary process or the homogeneous solution process, characterized in that chain cleavage additives of formula (I):

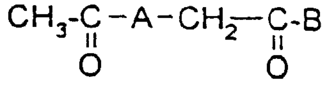 (I)

wherein -A- is a polymeric aliphatic radical obtainable by the polymerization of unsaturated compounds and B is a functional group which acts in polycarbonate preparation as the reactive part of the chain cleavage additives (I), with a molecular weight $\overline{M}n$ (number-average molecular weight, determined by gel permeation chromatography) of 250 to 30,000, are used in combination with other, known chain cleavage additives, the chain cleavage additives of formula (I) being used in an amount of 0.5 mol% to 50 mol%, based on the molar sum of the chain cleavage additives.

**2.** Aromatic polycarbonates with end groups of formula (Ia):

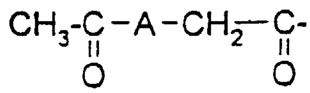

(Ia)

wherein -A- is as defined for formula (I) in Claim 1, with $\overline{M}w$ (weight-average, determined by light scattering) of between 8000 and 150,000, mixed with known aromatic polycarbonates with $\overline{M}w$ (weight-average, determined by light scattering) of between 8000 and 150,000, which result from the chain cleavage with the other, known chain cleavage additives, obtainable by the process of Claim 1.

**3.** Polycarbonates with average molecular weights $\overline{M}w$ (weight-average, determined by light scattering) of between 8000 and 150,000, of formula (II) :

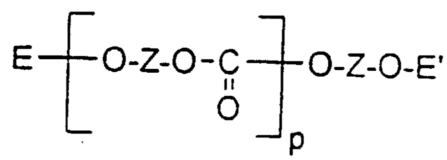

(II)

wherein

-O-Z-O- is a diphenate radical preferably having 6 to 30 C atoms,

E and E' are radicals of chain cleavage additives, 0.5 mol% to 50 mol% of the molar sum of E + E' corresponding to a radical of formula (Ia):

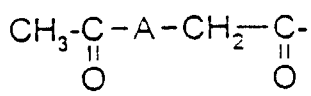

(Ia)

wherein -A- is as defined for formula (I) in Claim 1, and the remaining end groups E and E' resulting from the reaction with the other, known chain cleavage additives, optionally with the incorporation of phosgene, and wherein

p is the degree of polymerization which results from the molecular weights $\overline{M}w$ of 8000 to 150,000 and which is between 5 and 600.

**4.** Mixtures of

A) 80-99 wt.%, preferably 85-97 wt.%, of the polycarbonates or polycarbonate mixtures obtainable according to Claim 1, and

B) 1-20 wt.%, preferably 3-15 wt.%, of reactionless polyisobutylenes.

**Revendications**

**1.** Procédé de préparation de polycarbonates aromatiques à groupes terminaux cétocarboxyle aliphatiques et à des poids moléculaires moyens $\overline{M}w$ (moyenne en poids, déterminée par diffraction de la lumière) de 8 000 à 150 000, en mélange avec des polycarbonates aromatiques connus, ayant des poids moléculaires $\overline{M}w$ (moyenne en poids, déterminée par diffraction de la lumière) de 8 000 à 150 000, à partir de diphénols, de 1 mol % à 20 mol %, par

rapport aux moles de diphénols, de coupeurs de chaînes, de phosgène et le cas échéant d'agents ramifiants par les procédés connus de préparation des polycarbonates : le procédé à l'interface de phases ou le procédé en solution homogène, ce procédé se caractérisant en ce que l'on utilise des coupeurs de chaînes de formule (I)

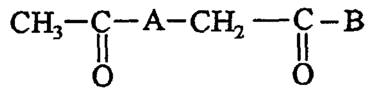

(I),

de poids moléculaire $\overline{M}$n (poids moléculaire moyen, moyenne en nombre, déterminée par chromatographie de perméation sur gel) de 250 à 30 000, dans laquelle -A- représente un radical aliphatique polymère obtenu par polymérisation de composés insaturés et B est un groupe fonctionnel faisant office de partie réactive des coupeurs de chaînes (I) à la préparation des polycarbonates, en combinaison avec d'autres coupeurs de chaînes connus, à raison de 0,5 mol % à 50 mol % de coupeurs de chaînes de formule (I) par rapport à la somme des moles des coupeurs de chaînes.

**2.** Polycarbonates aromatiques à groupes terminaux de formule (Ia)

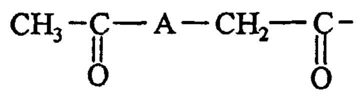

(Ia)

dans laquelle -A- a les significations indiquées en référence à la formule (I) dans la revendication 1,
à des poids moléculaires moyens $\overline{M}$w (moyenne en poids, déterminée par diffraction de la lumière) de 8 000 à 150 000, en mélange avec des polycarbonates aromatiques connus de poids moléculaires moyens $\overline{M}$w (moyenne en poids, déterminée par diffraction de la lumière) de 8 000 à 150 000, résultant de la coupure des chaînes par les autres coupeurs de chaînes connus, obtenus par le procédé de la revendication 1.

**3.** Polycarbonates ayant des poids moléculaires moyens $\overline{M}$w (moyenne en poids, déterminée par diffraction de la lumière) de 8 000 à 150 000, de formule (II)

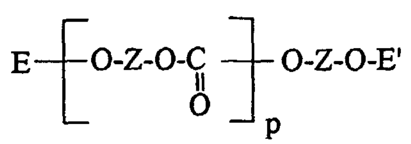

(II)

dans laquelle

-O-Z-O- représente un radical de diphénolate de préférence en $C_6$-$C_{30}$,

E et E' sont des radicaux de coupeur de chaînes, sous réserve que pour 0,5 mol% à 50 mol % de la somme des moles, E + E' représentent un radical de formule (Ia)

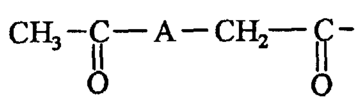

(Ia)

dans laquelle -A- a les significations indiquées en référence à la formule (I) dans la revendication 1, les autres groupes terminaux E et E' résultant de la réaction avec les autres coupeurs de chaînes connus, le cas échéant avec insertion de phosgène, et

p est le degré de polymérisation résultant des poids moléculaires $\overline{M}$w de 8 000 à 150 000 et qui se situe entre 5 et 600.

**4.** Mélanges de

A) 80 à 99 % en poids, de préférence 85 à 97 % en poids des polycarbonates et mélanges de polycarbonates obtenus selon la revendication 1 et
B) 1 à 20 % en poids, de préférence 3 à 15 % en poids de polyisobutylènes non réactifs.